# EUROPEAN PATENT SPECIFICATION

(11) **EP 3 404 056 B1**
(45) Date of publication and mention of the grant of the patent: **11.06.2025**
(21) Application number: 17738371.8
(22) Date of filing: 10.01.2017
(51) Int. Cl.: C08J 3/24, C08K 5/16, C08L 9/02, C08L 77/00

(54) **METHOD FOR PRODUCING THERMOPLASTIC ELASTOMER COMPOSITION**
VERFAHREN ZUR HERSTELLUNG EINER THERMOPLASTISCHEN ELASTOMERZUSAMMENSETZUNG
PROCÉDÉ DE PRODUCTION D'UNE COMPOSITION D'ÉLASTOMÈRE THERMOPLASTIQUE

(30) Priority: 12.01.2016 JP 2016003264
(43) Date of publication of application: 21.11.2018
(73) Proprietor: Zeon Corporation, Tokyo 100-8246 (JP)
(72) Inventor: NAKASHIMA, Tomonori, Tokyo 100-8246 (JP)
(74) Representative: Maiwald GmbH
(86) International application number: PCT/JP2017/000429
(87) International publication number: WO 2017/122617

(56) References cited:
- WO-A1-2005/042624
- WO-A1-2010/087431
- WO-A1-2015/194539
- WO-A1-2015/199058
- JP-A- 2012 057 111
- JP-A- H0 762 248
- JP-A- H11 349 734
- US-B1- 6 657 014

## Description

### TECHNICAL FIELD

The present invention relates to a method for producing a thermoplastic elastomer composition.

### BACKGROUND ART

A polyamide-based polymer has been known as a thermoplastic polymer having excellent heat resistance and moderate flexibility. However, the polyamide-based polymer has high hardness and low flexibility. Therefore, to improve these characteristics, a method for mixing a rubber in the polyamide-based polymer has been known. Various rubber blending techniques have been proposed.

In particular, in recent years, in order to mix the polyamide-based polymer with a rubber to soften the polyamide-based polymer and improve mechanical properties such as elongation and compression set, it has been proposed to finely disperse rubber particles in the polyamide-based polymer matrix and cross-link the rubber particles.

For example, Patent Document 1 proposes a thermoplastic elastomer composition obtained by mixing a rubber containing 30 wt% or more of a gel fraction uniformly dispersed, in a polyamide-based polymer, for dynamic cross-linking. In Patent Document 1, a hydrogenated nitrile rubber having a carboxyl group derived from methacrylic acid is used as the rubber containing 30 wt% or more of a gel fraction uniformly dispersed, thereby heat resistance, compression set resistance, and fatigue resistance are improved.

### RELATED ART

### PATENT DOCUMENTS

Patent Document 1: International Publication No. WO 2005/030869
Patent Document 2: JP-A-2012057111 discloses a nitrile group-containing highly saturated copolymer rubber composition that contains crosslinked particles comprising a (meth)acrylic ester monomer unit, a monomer unit having at least two polymerizable unsaturated groups, and an α,β-ethylenically unsaturated nitrile monomer unit, and that has an iodine value of ≤120.
Patent Document 3: WO-A-2015/199058 discloses a cross-linked rubber for a liquefied gas seal obtained by cross-linking a highly saturated nitrile rubber composition comprising a carboxyl group-containing highly saturated nitrile rubber, a highly saturated nitrile rubber, a polyamide resin, and a cross-linking agent.
Patent Document 4: US-B-6,657,014 discloses a crosslinkable rubber composition comprising a nitrile group-containing highly saturated copolymer rubber containing units of an ethlenically unsaturated dicarboxylic acid monoalkyl ester monomer, a polyamine crosslinking agent, and a basic crosslinking accelerator.
Patent Document 5: WO-A-2005/042624 discloses a thermoplastic elastomer composition which is prepared by subjecting at least one resin of a polyamide resin and a polyester resin and at least one rubber selected from the group consisting of an acrylic rubber, a nitrile rubber, a hydrogenated nitrile rubber and an epihalohydrin rubber to dynamic crosslinking while kneading them.

### SUMMARY OF THE INVENTION

### PROBLEM TO BE SOLVED BY THE INVENTION

However, the technique of Patent Document 1 makes it necessary to use a rubber having a comparatively high gel content such as 30 wt% or more of a gel fraction, which causes a problem that the dispersibility of the rubber is low to cause difficulty in stable production, a problem that the characteristics of a formed article to be obtained are unstable, and a problem that the cold resistance of the formed article to be obtained is not sufficient. In the technique of Patent Document 1, the hydrogenated nitrile rubber having a carboxyl group derived from methacrylic acid is used. The present inventors have made the study, and found that, when the gel fraction is reduced, the formed article to be obtained is poor in compression set resistance and fatigue resistance though production stability is improved.

An object of the present invention is to provide a method for producing a thermoplastic elastomer composition which can provide stable production, and provide a formed article excellent in heat resistance, compression set resistance, bending fatigue resistance, and cold resistance.

### MEANS FOR SOLVING THE PROBLEM

The present inventors have engaged in intensive research to achieve the above object and as a result discovered that the object can be achieved by dynamically cross-linking a highly saturated nitrile rubber (A) containing an α,β-ethylenically unsaturated nitrile monomer unit and an α,β-ethylenically unsaturated dicarboxylic acid monoester monomer unit and having an iodine value measured in accordance with JIS K 6235 of 120 or less in the presence of a polyamide-based polymer (B) and a polyamine cross-linking agent (C), thereby completing the present invention.

That is, the present invention provides a method for producing a thermoplastic elastomer composition, the method including the step of dynamically cross-linking a highly saturated nitrile rubber (A) in the presence of a polyamide-based polymer (B) and a polyamine cross-linking agent (C), the highly saturated nitrile rubber (A) containing an α,β-ethylenically unsaturated nitrile monomer unit and an α,β-ethylenically unsaturated dicarboxylic acid monoester monomer unit and having an iodine value measured in accordance with JIS K 6235 of 120 or less.

In the method for producing a thermoplastic elastomer composition of the present invention, the dynamic cross-linking is preferably performed by mixing the highly saturated nitrile rubber (A), the polyamide-based polymer (B), and the polyamine cross-linking agent (C) at 100 to 400°C.

In the method for producing a thermoplastic elastomer composition of the present invention, a blending ratio of the highly saturated nitrile rubber (A) and the polyamide-based polymer (B) is preferably 20 : 80 to 80 : 20 in terms of a weight ratio of "highly saturated nitrile rubber (A) : polyamide-based polymer (B)".

In the method for producing a thermoplastic elastomer composition of the present invention, an amount of the polyamine cross-linking agent (C) blended is preferably 0.1 to 20 parts by weight with respect to 100 parts by weight of the highly saturated nitrile rubber (A).

In the method for producing a thermoplastic elastomer composition of the present invention, the polyamide-based polymer (B) is preferably at least one selected from nylon 6 and nylon 66.

In the method for producing a thermoplastic elastomer composition of the present invention, it is preferable that, in the dynamic cross-linking step, the highly saturated nitrile rubber (A) be dynamically cross-linked in the presence of the polyamide-based polymer (B), the polyamine cross-linking agent (C), and a basic cross-linking accelerator (D).

In the method for producing a thermoplastic elastomer composition of the present invention, an amount of the basic cross-linking accelerator (D) blended is preferably 0.1 to 20 parts by weight with respect to 100 parts by weight of the highly saturated nitrile rubber (A).

The present invention provides a method for producing a formed article, the method including the step of forming the thermoplastic elastomer composition obtained by any one of the methods stated above.

### EFFECTS OF INVENTION

The present invention can provide a method for producing a thermoplastic elastomer composition which can provide stable production, and provide a formed article excellent in heat resistance, compression set resistance, bending fatigue resistance, and cold resistance.

### DESCRIPTION OF EMBODIMENTS

A method for producing a thermoplastic elastomer composition of the present invention includes the step of dynamically cross-linking a highly saturated nitrile rubber (A) in the presence of a polyamide-based polymer (B) and a polyamine cross-linking agent (C), the highly saturated nitrile rubber (A) containing an α,β-ethylenically unsaturated nitrile monomer unit and an α,β-ethylenically unsaturated dicarboxylic acid monoester monomer unit and having an iodine value measured in accordance with JIS K 6235 of 120 or less.

### Highly Saturated Nitrile Rubber (A)

The highly saturated nitrile rubber (A) used in the present invention contains at least an α,β-ethylenically unsaturated nitrile monomer unit and an α,β-ethylenically unsaturated dicarboxylic acid monoester monomer unit.

A monomer for forming the α,β-ethylenically unsaturated nitrile monomer unit (hereinafter, sometimes referred to as "α,β-ethylenically unsaturated nitrile") is not particularly limited so long as it is an α,β-ethylenically unsaturated compound having a nitrile group. As examples thereof, acrylonitrile; α-halogenoacrylonitriles such as α-chloroacrylonitrile and α-bromoacrylonitrile; α-alkylacrylonitriles such as methacrylonitrile, and the like may be mentioned. Among these, acrylonitrile and methacrylonitrile are preferable, and acrylonitrile is particularly preferable. As the α,β-ethylenically unsaturated nitrile, a plurality of types of these may be used in combination.

The content of the α,β-ethylenically unsaturated nitrile monomer unit is preferably 10 to 60 wt%, more preferably 15 to 55 wt%, and still more preferably 20 to 50 wt%, with respect to all the monomer units constituting the highly saturated nitrile rubber (A). By setting the content of the α,β-ethylenically unsaturated nitrile monomer unit within the above-mentioned range, it is possible to make a formed article to be obtained good in oil resistance and cold resistance.

A monomer for forming the α,β-ethylenically unsaturated dicarboxylic acid monoester monomer unit is not particularly limited so long as it is a monoester monomer of an α,β-ethylenically unsaturated dicarboxylic acid having one unsubstituted (free) carboxyl group which is not esterified or the like. The unsubstituted carboxyl group mainly acts as a crosslinkable group for dynamic cross-linking to be described later. By containing the α,β-ethylenically unsaturated dicarboxylic acid monoester monomer unit, it is possible to make the formed article to be obtained excellent in tensile stress, low heat buildup, heat resistance, compression set resistance, fatigue resistance, and cold resistance.

As an organic group bonding with a carbonyl group through an oxygen atom at an ester moiety of the α,β-ethylenically unsaturated dicarboxylic acid monoester monomer, an alkyl group, a cycloalkyl group, and an alkylcycloalkyl group are preferable, and an alkyl group is particularly preferable. The alkyl group as an organic group bonding with a carbonyl group is preferably one having 1 to 12 carbon atoms, and more preferably one having 2 to 6 carbon atoms. The cycloalkyl group as an organic group bonding with a carbonyl group is preferably one having 5 to 12 carbon atoms, and more preferably one having 6 to 10 carbon atoms. Furthermore, the alkylcycloalkyl group as an organic group bonding with a carbonyl group is preferably one having 6 to 12 carbon atoms, and more preferably one having 7 to 10 carbon atoms. By setting the number of carbon atoms of the organic group bonding with a carbonyl group within the above-mentioned range, it is possible to make the thermoplastic elastomer composition good in processing stability and to further improve the mechanical properties of the formed article to be obtained.

As specific examples of the α,β-ethylenically unsaturated dicarboxylic acid monoester monomer, maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethyl cyclopentyl maleate and monoethyl cyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethyl cyclopentyl fumarate and monoethyl cyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethyl cyclopentyl citraconate and monoethyl cyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethyl cyclopentyl itaconate and monoethyl cyclohexyl itaconate; and the like may be mentioned.

Among these, in view of further improving the heat resistance, the compression set resistance, and the fatigue resistance of the formed article to be obtained, monoesters of dicarboxylic acid having carboxyl groups at two carbon atoms forming an α,β-ethylenically unsaturated bond such as monopropyl maleate, mono-n-butyl maleate, monopropyl fumarate, mono-n-butyl fumarate, monopropyl citraconate, and mono-n-butyl citraconate are preferable, monoalkyl esters of dicarboxylic acid having carboxyl groups at the two carbon atoms forming the α,β-ethylenically unsaturated bond are more preferable, and mono-n-butyl maleate is particularly preferable. Note that, the number of carbon atoms of the alkyl group of the monoalkyl ester of the dicarboxylic acid having carboxyl groups at the two carbon atoms forming the α,β-ethylenically unsaturated bond is preferably 2 to 6.

The content of the α,β-ethylenically unsaturated dicarboxylic acid monoester monomer unit is preferably 0.1 to 20 wt%, more preferably 0.2 to 15 wt%, and still more preferably 0.5 to 10 wt%, with respect to all the monomer units constituting the highly saturated nitrile rubber (A). By setting the content of the α,β-ethylenically unsaturated dicarboxylic acid monoester monomer unit within the above-mentioned range, it is possible to make the formed article to be obtained better in heat resistance, compression set resistance, and fatigue resistance.

The highly saturated nitrile rubber (A) used in the present invention preferably includes a diene monomer unit and/or an α-olefin monomer unit in addition to the α,β-ethylenically unsaturated nitrile monomer unit and α,β-ethylenically dicarboxylic acid monoester monomer unit. Due to this, it is possible to improve the rubber elasticity of the formed article to be obtained.

As specific examples of the diene monomer for forming the diene monomer unit, conjugated diene monomers having 4 or more carbon atoms such as 1,3-butadiene, isoprene, 2,3-dimethyl-1,3-butadiene, and 1,3-pentadiene; and non-conjugated diene monomers having 5 to 12 carbon atoms such as 1,4-pentadiene and 1,4-hexadiene; and the like may be mentioned. Among these, conjugated diene monomers are preferable, and 1,3-butadiene is more preferable.

As the α-olefin monomer for forming the α-olefin monomer unit, an α-olefin monomer having 2 to 12 carbon atoms is preferable. As specific examples thereof, ethylene, propylene, 1-butene, 4-methyl-1-pentene, 1-hexene, 1-octene, and the like may be mentioned.

When the highly saturated nitrile rubber (A) contains a diene monomer unit and/or an α-olefin monomer unit, the content thereof is preferably 20 to 89.9 wt%, more preferably 30 to 84.8 wt%, and still more preferably 40 to 79.5 wt%, with respect to all the monomer units constituting the highly saturated nitrile rubber (A). By setting the content of the diene monomer unit and/or α-olefin monomer unit within the above-mentioned range, it is possible to make the formed article to be obtained excellent in rubber elasticity while maintaining good heat resistance and chemical stability.

The highly saturated nitrile rubber (A) used in the present invention may be one which is obtained by copolymerization of an α,β-ethylenically unsaturated nitrile monomer, α,β-ethylenically unsaturated dicarboxylic acid monoester monomer, and diene monomer and/or α-olefin monomer and also another monomer able to copolymerize with these. As such another monomer, an α,β-ethylenically unsaturated carboxylic acid ester monomer other than α,β-ethylenically unsaturated dicarboxylic acid monoester monomer, an α,β-ethylenically unsaturated monocarboxylic acid monomer, an α,β-ethylenically unsaturated polyvalent carboxylic acid monomer, an α,β-ethylenically unsaturated polyvalent carboxylic acid anhydride monomer, an aromatic vinyl monomer, a fluorine-containing vinyl monomer, a copolymerizable antiaging agent, and the like may be mentioned.

As the α,β-ethylenically unsaturated carboxylic acid ester monomer other than α,β-ethylenically unsaturated dicarboxylic acid monoester monomer, (meth) acrylic acid alkyl ester (meaning acrylic acid alkyl ester and/or methacrylic acid alkyl ester; the same is also applied hereinbelow) monomers containing alkyl group having 1 to 18 carbon atoms such as methyl acrylate, ethyl acrylate, propyl acrylate, n-butyl acrylate, n-pentyl acrylate, 2-ethylhexyl acrylate, ethyl methacrylate, and propyl methacrylate; (meth) acrylic acid alkoxyalkyl ester monomers containing alkoxyalkyl group having 2 to 18 carbon atoms and alkoxy group having 1 to 12 carbon atoms such as methoxymethyl acrylate and ethoxymethyl methacrylate; amino group-containing (meth) acrylic acid alkyl ester monomers containing alkyl group having 1 to 16 carbon atoms such as 2-aminoethyl acrylate and aminomethyl methacrylate; (meth) acrylic acid hydroxyalkyl ester monomers containing alkyl group having 1 to 16 carbon atoms such as 2-hydroxyethyl acrylate and 3-hydroxypropyl methacrylate; fluoroalkyl group-containing (meth) acrylic acid alkyl ester monomers containing alkyl group having 1 to 16 carbon atoms such as trifluoroethyl acrylate and difluoromethyl methacrylate; maleic acid dialkyl esters containing alkyl groups having 1 to 18 carbon atoms such as dimethyl maleate and di-n-butyl maleate; fumaric acid dialkyl esters containing alkyl groups having 1 to 18 carbon atoms such as dimethyl fumarate and di-n-butyl fumarate; maleic acid dicycloalkyl esters containing cycloalkyl groups having 4 to 16 carbon atoms such as dicyclopentyl maleate and dicyclohexyl maleate; fumaric acid dicycloalkyl esters containing cycloalkyl groups having 4 to 16 carbon atoms such as dicyclopentyl fumarate and dicyclohexyl fumarate; itaconic acid dialkyl esters containing alkyl groups having 1 to 18 carbon atoms such as dimethyl itaconate and di-n-butyl itaconate; itaconic acid dicycloalkyl esters containing cycloalkyl groups having 4 to 16 carbon atoms such as dicyclohexyl itaconate; and the like may be mentioned.

As the α,β-ethylenically unsaturated monocarboxylic acid monomer, acrylic acid, methacrylic acid, crotonic acid, and the like may be mentioned.

As the α,β-ethylenically unsaturated polyvalent carboxylic acid monomer, itaconic acid, fumaric acid, maleic acid, and the like may be mentioned.

As the monomer of anhydride of α,β-ethylenically unsaturated polyvalent carboxylic acid, maleic anhydride, and the like may be mentioned.

As the aromatic vinyl monomer, styrene, α-methylstyrene, vinylpyridine, and the like may be mentioned.

As the fluorine-containing vinyl monomer, fluoroethyl vinyl ether, fluoropropyl vinyl ether, o-trifluoromethylstyrene, vinyl pentafluorobenzoate, difluoroethylene, tetrafluoroethylene, and the like may be mentioned.

As the copolymerizable antiaging agent, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, and the like may be mentioned.

These copolymerizable other monomers may be used in combinations of two or more thereof. The content of the copolymerizable other monomer unit(s) is preferably 50 wt% or less, more preferably 40 wt% or less, and still more preferably 10 wt% or less, with respect to all the monomer units constituting the highly saturated nitrile rubber (A).

The content of the carboxyl group in the highly saturated nitrile rubber (A) used in the present invention, that is, the number of moles of the carboxyl group per 100 g of the highly saturated nitrile rubber (A) is within a range of preferably 5×10⁻⁴ to 5×10⁻¹ ephr, more preferably 1×10⁻³ to 1×10⁻¹ ephr, and still more preferably 5×10⁻³ to 6×10⁻² ephr, and it is possible to further improve the mechanical properties and the compression set resistance of the formed article to be obtained while making production stability good.

The iodine value of the highly saturated nitrile rubber (A) used in the present invention and measured in accordance with JIS K 6235 is 120 or less, preferably 80 or less, more preferably 25 or less, and still more preferably 15 or less. When the iodine value of the highly saturated nitrile rubber (A) is too high, the heat resistance and the ozone resistance of the formed article to be obtained are liable to be degraded.

The polymer Mooney viscosity (ML1+4, 100°C) of the highly saturated nitrile rubber (A) is preferably 15 to 200, more preferably 20 to 150, and still more preferably 30 to 120. By setting the polymer Mooney viscosity of the highly saturated nitrile rubber (A) within the above-mentioned range, it is possible to further improve the mechanical properties and the compression set resistance of the formed article to be obtained while making production stability good.

In the highly saturated nitrile rubber (A) used in the present invention, the content of a gel fraction is preferably 30 wt% or less, more preferably 25 wt% or less, and still more preferably 20 wt% or less in view of making production stability good so as to stabilize the characteristics of the formed article to be obtained. The lower limit of the content of the gel fraction is not particularly limited, and usually 0.1 wt% or more. The gel fraction is a constituent which has been already cross-linked and is therefore not soluble in a good solvent of the highly saturated nitrile rubber (A), and the content thereof can be usually measured by the following method. That is, the highly saturated nitrile rubber (A) is weighed in a predetermined amount and dissolved in a good solvent (for example, methyl ethyl ketone, tetrahydrofuran), the obtained solution is filtered by a filter such as a metal mesh, and the solvent insolubles trapped on the filter is measured to determine the content of the gel fraction.

A method for producing the highly saturated nitrile rubber (A) used in the present invention is not particularly limited. For example, a method involving copolymerizing an α,β-ethylenically unsaturated nitrile monomer, an α,β-ethylenically unsaturated dicarboxylic acid monoester monomer, a diene monomer and/or an α-olefin monomer, and a copolymerizable other monomer which is added according to need is useful and preferable. As the polymerization method, a known emulsion polymerization method, suspension polymerization method, bulk polymerization method, and solution polymerization method may be used. Since a polymerization reaction can be easily controlled, the emulsion polymerization method is preferable. When the iodine value of a copolymer obtained by copolymerization is higher than 120, hydrogenation (hydrogenation reaction) of the copolymer may be performed. In this case, a method for hydrogenation is not particularly limited, and a known method may be employed.

### Polyamide-Based Polymer (B)

The polyamide-based polymer (B) used in the present invention is not limited as long as it is a polymer having an acid amide bond (-CONH-). A polyamide polymer generally used as a polyamide resin is preferably used.

Specifically, a polymer obtained by polycondensation of diamine and dibasic acid, a polymer obtained by polycondensation of a diamine derivative such as diformyl and dibasic acid, a polymer obtained by polycondensation of a dibasic acid derivative such as a dimethyl ester, and a diamine, a polymer obtained by reaction of dinitrile or diamide and formaldehyde, a polymer obtained by polyaddition of diisocyanate and dibasic acid, a polymer obtained by self-condensation of an amino acid or its derivative, a polymer obtained by ring-opening polymerization of lactam, and the like may be mentioned. These polyamide polymers may also contain polyether polymer block and the like as copolymer ingredient.

As specific examples of the polyamide polymer, aliphatic polyamide resins such as nylon 46, nylon 6, nylon 66, nylon 610, nylon 612, nylon 1010, nylon 1020, nylon 11, and nylon 12; aromatic polyamide resins such as polyhexamethylene diamine terephthalamide, polyhexamethylene isophthalamide, poly-p-phenyleneterephthalamide, poly-p-benzamide, poly-p-amidehydrazide, poly-p-phenyleneterephthalamide-3,4-diphenyletherterephthalamide, and copoly-paraphenylene 3,4' oxydiphenylene terephthalamide may be mentioned.

Among these, in view of general usefulness, heat resistance, and the like, nylon 6, nylon 66, nylon 11, nylon 12, and the like are preferable, and nylon 6 and nylon 66 are more preferable.

The polyamide-based polymer (B) has a melting point of preferably 100 to 350°C, more preferably 120 to 300°C, and still more preferably 150 to 280°C. The melting point of the polyamide polymer is a melting peak temperature measured by differential scanning calorimetry (DSC), which is defined by JIS K7121.

The blending ratio of the highly saturated nitrile rubber (A) and the polyamide-based polymer (B) in the present invention is preferably 20 : 80 to 80 : 20, more preferably 25 : 75 to 75 : 25, still more preferably 30 : 70 to 70 : 30, and particularly preferably 35 : 65 to 65 : 35, in terms of the weight ratio of "highly saturated nitrile rubber (A) : polyamide-based polymer (B)". By setting the blending ratio of the highly saturated nitrile rubber (A) and the polyamide-based polymer (B) within the above-mentioned range, it is possible to further improve the heat resistance, the compression set resistance, the fatigue resistance, and the cold resistance of the formed article to obtained.

### Polyamine Cross-Linking Agent (C)

The polyamine cross-linking agent (C) used in the present invention is not particularly limited so long as it is a compound having two or more amino groups or a compound which becomes a form having two or more amino groups at the time of cross-linking. As the polyamine cross-linking agent (C), a compound derived from an aliphatic hydrocarbon or an aromatic hydrocarbon by substituting a plurality of hydrogen atoms with amino groups or hydrazide structures (structures each represented by -CONHNH₂, where CO represents a carbonyl group) is preferable. The polyamine cross-linking agent (C) acts as a cross-linking agent when the highly saturated nitrile rubber (A) is dynamically cross-linked. By using the polyamine cross-linking agent (C) as the cross-linking agent, it is possible to make the formed article to be obtained excellent in compression set resistance while making heat resistance, fatigue resistance, and cold resistance good.

As specific examples of the polyamine cross-linking agent (C), aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline, 4,4-(p-phenylenediisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; polyvalent hydrazides such as isophthalic acid dihydrazide, terephthalic acid dihydrazide, phthalic acid dihydrazide, 2,6-naphthalene dicarboxylic acid dihydrazide, naphthalenic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, and pyromellitic acid dihydrazide; may be mentioned. Among these, in view of making the effects of the present invention more remarkable, the aliphatic polyvalent amines and the aromatic polyvalent amines are preferable, hexamethylenediamine carbamate and 2,2-bis[4-(4-aminophenoxy)phenyl]propane are more preferable, and hexamethylenediamine carbamate is particularly preferable. The polyamine cross-linking agents (c) may be used as single type alone or may be used as two or more types together.

The amount of the polyamine cross-linking agent (C) blended in the highly saturated nitrile rubber composition used in the present invention is preferably 0.1 to 20 parts by weight, more preferably 0.5 to 10 parts by weight, and still more preferably 1 to 5 parts by weight, with respect to 100 parts by weight of the highly saturated nitrile rubber (A). By setting the amount of the polyamine cross-linking agent (C) blended within the above-mentioned range, it is possible to more suitably improve the mechanical properties and the compression set resistance of the formed article to be obtained. When the polyamine cross-linking agent (C) is not blended, the dynamic cross-linking of the highly saturated nitrile rubber (A) is insufficient and the formed article to be obtained becomes poor in compression set resistance, bending fatigue resistance, and cold resistance.

### Method for Producing Thermoplastic Elastomer Composition

In the method for producing the thermoplastic elastomer composition of the present invention, the above-mentioned highly saturated nitrile rubber (A) is dynamically cross-linked in the presence of the polyamide-based polymer (B) and the polyamine cross-linking agent (C).

In the present invention, the dynamic cross-linking means that the highly saturated nitrile rubber (A) is cross-linked in the presence of the polyamide-based polymer (B) and the polyamine cross-linking agent (C) under the action of the polyamine cross-linking agent (C) while the highly saturated nitrile rubber (A) is dispersed in the polyamide-based polymer (B). As the dynamic cross-linking, a method involving giving shear to and mixing the highly saturated nitrile rubber (A) and the polyamide-based polymer (B) in the presence of the polyamine cross-linking agent (C) using a batch-type kneader or a continuous type kneader such as a twin-screw extruder to cross-link crosslinkable groups such as carboxyl groups contained in the highly saturated nitrile rubber (A) may be mentioned. Thus, by dynamically cross-linking the highly saturated nitrile rubber (A) while dispersing the highly saturated nitrile rubber (A) in the polyamide-based polymer (B), the thermoplastic elastomer composition having a configuration in which the cross-linked product of the highly saturated nitrile rubber (A) is dispersed in the polyamide-based polymer (B) can be obtained. Therefore, it is possible to make the formed article to be obtained excellent in heat resistance, compression set resistance, bending fatigue resistance, and cold resistance.

The thermoplastic elastomer composition of the present invention obtained as described above preferably has a configuration in which a particle-like disperse phase formed by the highly saturated nitrile rubber (A) which is dynamically cross-linked under the action of the polyamine cross-linking agent (C) is dispersed in continuous phase formed by the polyamide-based polymer (B). The average particle size of the disperse phase of the dynamically cross-linked highly saturated nitrile rubber (A) is preferably 0.01 to 5.00 µm. By setting the average particle size of the disperse phase within the above-mentioned range, it is possible to further improve compression set resistance, bending fatigue resistance, and cold resistance. A confirmation of the continuous phase and the disperse phase, and a measurement of the average particle size can be performed using a transmission electron microscope, a scanning electron microscope, or an atomic force microscope.

In the present invention, the method for dynamic cross-linking may be any general dynamic cross-linking method, but the following method is preferable.

First, the highly saturated nitrile rubber (A) is masticated. Next, the polyamide-based polymer (B) is heated to melt and the masticated highly saturated nitrile rubber (A) is mixed with and dispersed into the heated and melted polyamide-based polymer (B). Then, it is preferable that, when the highly saturated nitrile rubber (A) is sufficiently finely dispersed in the matrix of the polyamide-based polymer (B), the polyamine cross-linking agent (C) is added and that the resultant is further kneaded so as to dynamically cross-link the highly saturated nitrile rubber (A). By blending the ingredients in such an order for dynamic cross-linking, the highly saturated nitrile rubber (A) can be suitably finely dispersed in the matrix of the polyamide-based polymer (B). Therefore, the bending fatigue resistance of the formed article to be obtained can be further improved.

As the kneader used for kneading, a kneader generally used for dynamic cross-linking may be used. As examples thereof, batch-type kneaders such as a Banbury mixer, a kneader, a Brabender Plasticorder, and a Labo Plastomill; continuous type kneaders such as a single-screw extruder and a twin-screw extruder; and the like may be mentioned. These may also be combined for use. The kneading temperature in dynamic cross-linking may be a temperature equal to or higher than the melting point of the polyamide-based polymer (B) to be used. The kneading temperature is preferably 100 to 400°C, more preferably 150 to 350°C, and still more preferably 200 to 300°C. By setting the kneading temperature within the above-mentioned range, it is possible to provide more suitable dynamic cross-linking, whereby the action and effect of the present invention can be made more remarkable. When using a continuous type kneader such as an extruder, the polyamine cross-linking agent (C) is preferably added through holes provided in the middle of the extruder barrel.

The thermoplastic elastomer produced by dynamic cross-linking may be in a pellet form.

In the present invention, in addition to the above-mentioned highly saturated nitrile rubber (A), polyamide-based resin (B), and polyamine cross-linking agent (C), a basic cross-linking accelerator (D) may further be added.

As specific examples of the basic cross-linking accelerator (D), basic cross-linking accelerators having a cyclic amidine structure such as 1,8-diazabicyclo[5,4,0]undecene-7(hereinafter, sometimes abbreviated as "DBU"), 1,5-diazabicyclo[4,3,0]nonene-5 (hereinafter, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl) imidazole, 1-methylbenzimidazole, 1-methyl-2-benzylbenzimidazole, 1-methyl-5-nitrobenzimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, and 1-ethoxymethyl-2-methylimidazoline; guanidine-based basic cross-linking accelerators such as tetramethylguanidine, tetraethylguanidine, diphenylguanidine, 1,3-di-o-tolylguanidine, and o-tolylbiguanide; aldehyde amine-based basic cross-linking accelerators such as n-butylaldehyde aniline and acetaldehyde ammonia; dicycloalkylamines such as dicyclopentylamine, dicyclohexylamine, and dicycloheptylamine; secondary amine-based basic cross-linking accelerators such as N-methylcyclopentylamine, N-butylcyclopentylamine, N-heptylcyclopentylamine, N-octylcyclopentylamine, N-ethylcyclohexylamine, N-butylcyclohexylamine, N-heptylcyclohexylamine, N-octylcyclooctylamine, N-hydroxymethylcyclopentylamine, N-hydroxybutylcyclohexylamine, N-methoxyethylcyclopentylamine, N-ethoxybutylcyclohexylamine, N-methoxycarbonylbutylcyclopentylamine, N-methoxycarbonylheptylcyclohexylamine, N-aminopropylcyclopentylamine, N-aminoheptylcyclohexylamine, di(2-chlorocyclopentyl)amine, and di(3-chlorocyclopentyl)amine; and the like may be mentioned. Among these, guanidine-based basic cross-linking accelerators, secondary amine-based basic cross-linking accelerators, and basic cross-linking accelerators having a cyclic amidine structure are preferable, basic cross-linking accelerators having a cyclic amidine structure are more preferable, 1,8-diazabicyclo[5,4,0]undecene-7 and 1,5-diazabicyclo[4,3,0]nonene-5 are still more preferable, and 1,8-diazabicyclo[5,4,0]undecene-7 is particularly preferable. The basic cross-linking accelerators having a cyclic amidine structure may also form a salt together with an organocarboxylic acid or alkyl phosphoric acid and the like. The secondary amine-based basic cross-linking accelerators may be one in which alcohols such as an alkylene glycol and an alkyl alcohol having 5 to 20 carbon atoms are mixed. Furthermore, an inorganic acid and/or organic acid may also be contained. The secondary amine-based basic cross-linking accelerators and the inorganic acid and/or organic acid may form a salt and furthermore may form a complex with the alkylene glycol.

The amount of the basic cross-linking accelerator (D) blended in the thermoplastic elastomer composition of the present invention is preferably 0.1 to 20 parts by weight, more preferably 0.2 to 15 parts by weight, and still more preferably 0.5 to 10 parts by weight, with respect to 100 parts by weight of the highly saturated nitrile rubber (A). By setting the amount of the basic cross-linking accelerator (D) blended within the above-mentioned range, it is possible to further improve the effect of the present invention.

The thermoplastic elastomer composition obtained by the producing method of the present invention may further contain a compounding agent generally blended with a rubber or a resin, so long as an effect of the present invention is not impaired. Examples of the compounding agent include reinforcing agents such as carbon black, silica, and various short fibers such as aramid, fillers such as calcium carbonate, talc, and clay, plasticizers, slip agents, antiaging agents, photostabilizers, scorch retarders such as a primary amine, activating agents such as diethylene glycol, silane coupling agents, plasticizers, processing aids, slip agents, adhesives, lubricants, flame retardants, antifungal agents, acid acceptors, antistatic agents, and pigments. Cross-linking agents other than the polyamine cross-linking agent such as sulfur and organic peroxide, or various cross-linking accelerators other than the basic cross-linking accelerator may be blended.

A polymer other than the highly saturated nitrile rubber (A) and the polyamide-based polymer (B) may be blended so long as an effect of the present invention is not impaired. As examples of the other polymer, an acrylic rubber, an ethylene-acrylic acid copolymer rubber, a fluororubber, a styrene-butadiene copolymer rubber, a polybutadiene rubber, an ethylene-propylene copolymer rubber, an ethylene-propylene-diene terpolymer rubber, an epichlorohydrin rubber, a urethane rubber, a chloroprene rubber, a silicone rubber, a fluorosilicone rubber, a chlorosulfonated polyethylene rubber, a natural rubber, a polyisoprene rubber, polyethylene, polypropylene, polystyrene, polyvinyl chloride, polymethyl methacrylate, polyacetal, polycarbonate, polyphenylene ether, polyphenylene sulfide, polyether ether ketone, polyarylate, polysulfone, an ethylene-vinyl acetate copolymer, an ethylene-vinyl alcohol copolymer, polyethylene terephthalate, polybutylene terephthalate, polytetrafluoroethylene, polyvinylidene fluoride, aromatic polyamide polymers having a melting point exceeding 350°C (including ones to be incinerated without being melted even during heating) such as poly-p-phenyleneterephthalamide, poly-p-benzamide, poly-p-amidehydrazide, poly-p-phenyleneterephthalamide-3,4-diphenyletherterephthalamide, and copoly-p-phenylene 3,4' oxydiphenylene terephthalamide, phenol resins, epoxy resins, urea resins, and polyurethane, and the like may be mentioned.

These compounding agents and polymers may be added during dynamic cross-linking, or may be separately blended with the thermoplastic elastomer composition obtained by dynamic cross-linking, followed by kneading.

The thermoplastic elastomer composition obtained by the producing method of the present invention can be formed to provide a formed article having an arbitrarily shape. As the forming method, press forming, extrusion molding, injection molding, blow forming, calendar forming, inflation forming, slush forming, and the like may be mentioned. The forming temperature is usually 100 to 400°C, and preferably 200 to 300°C. The forming time is usually 0.5 minutes to 24 hours, and preferably 1 minute to 1 hour. The thus obtained formed article is obtained by using the thermoplastic elastomer composition obtained by the producing method of the present invention, whereby the formed article can be stably produced, and has excellent heat resistance, compression set resistance, fatigue resistance, and cold resistance.

Therefore, the formed article obtained by the present invention, taking advantage of such a characteristic, can be suitably used as various rubber parts. The rubber parts are not particularly limited, and can be used for various seal materials such as O-rings, packings, diaphragms, oil seals, shaft seals, bearing seals, well head seals, air compressor seals, seals for sealing in Freon or fluorohydrocarbons or carbon dioxide which is used for compressors for cooling devices for air-conditioners or refrigerating machines of air-conditioning systems, seals for sealing in supercritical carbon dioxide or subcritical carbon dioxide which is used for washing media in precision washing, seals for roller devices (roller bearings, automotive hub units, automotive water pumps, linear guide devices and ball screws, and the like), valves and valve seats, BOP (blow out preventer), and platters; various types of gaskets such as intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator gaskets which are attached between pairs of housings straddling unit cells provided with positive electrodes, electrolyte plates, and negative electrodes, and top cover gaskets for hard disk drives; various types of rolls such as printing rolls, ironmaking rolls, papermaking rolls, industrial rolls, and office equipment rolls; various types of belts such as flat belts (film core flat belts, cord flat belts, laminated flat belts, single type flat belts, and the like), V-belts (wrapped **V-**belts, low edge V-belts, and the like), V-ribbed belts (single **V-**ribbed belts, double V-ribbed belts, wrapped V-ribbed belt, rubber-backed V-ribbed belts, top cog V-ribbed belts, and the like), CVT use belts, timing belts, toothed belts, and conveyor belts; various types of hoses such as fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, and flow lines; various types of boots such as CVJ boots, propeller shaft boots, constant velocity joint boots, and rack and pinion boots; attenuating member rubber parts such as cushion materials, dynamic dampers, rubber couplings, air springs, and vibration-proofing materials; dust covers, automotive interior members, tires, covered cables, shoe soles, electromagnetic wave shields, binders such as binders for flexible printed circuit boards, fuel cell separators, and also other broad applications such as the cosmetic product field, the medicinal product field, the field in contact with the food product, and the electronics field.

### EXAMPLES

Hereinafter, the present invention will be described based on detailed Examples. Hereinafter, unless otherwise indicated, "parts" are by weight. The tests and evaluations were based on the following.

### Iodine Value

The iodine value of a highly saturated nitrile rubber was measured in accordance with JIS K 6235.

### Content of Carboxyl Group

To 0.2 g of a 2-mm square piece of a highly saturated nitrile rubber, 100 mL of 2-butanone was added. The mixture was stirred for 16 hours, and 20 mL of ethanol and 10 mL of water were then added to the mixture. While stirring, a titration was performed at room temperature by using a 0.02N hydrous ethanol solution of potassium hydroxide, and thymolphthalein as an indicator, and thus the content of the carboxyl group was determined as the number of moles of the carboxyl group in 100 g of a highly saturated nitrile rubber (units: ephr).

### Contents of Respective Monomer Units Constituting Highly Saturated Nitrile Rubber

The content of a mono-n-butyl maleate unit and the content of a methacrylic acid unit were determined as follows: to 0.2 g of a 2-mm square piece of a highly saturated nitrile rubber, 100 mL of 2-butanone was added, the mixture was stirred for 16 hours, and 20 mL of ethanol and 10 mL of water were then added to the mixture; while stirring, a titration was performed at room temperature by using a 0.02N hydrous ethanol solution of potassium hydroxide, and thymolphthalein as an indicator, and thus the content of the carboxyl group was determined in terms of the number of moles of the carboxyl group in 100 g of a highly saturated nitrile rubber; and the determined number of moles was converted into the amount of the mono-n-butyl maleate unit and the amount of the methacrylic acid unit.

The content of each of a 1,3-butadiene unit and a saturated butadiene unit was determined by measuring the iodine values (in accordance with JIS K 6235) before and after a hydrogenation reaction using a highly saturated nitrile rubber.

The content of an acrylonitrile unit was determined by measuring the nitrogen content in the highly saturated nitrile rubber by the Kjeldahl method in accordance with JIS K6384.

The content of each of a methoxyethyl acrylate unit and a n-butyl acrylate unit was calculated as the balance of the above respective monomer units.

### Gel Fraction Amount in Highly Saturated Nitrile Rubber

0.2 g of a highly saturated nitrile rubber was weighed, immersed in methyl ethyl ketone, left at 23°C after 24 hours, and then filtered by using a metal mesh having 325 meshes. The weight of the insolubles trapped in the metal mesh after removal of the solvent was measured, and the ratio with respect to the total weight of the immersed rubber was calculated. This was taken as a gel fraction amount (wt%).

### Mooney Viscosity (Polymer Mooney)

The Mooney viscosity of the highly saturated nitrile rubber (polymer Mooney) was measured in accordance with JIS K6300-1 (units: (ML1+4, 100°C)).

### Heat Resistance

A thermoplastic elastomer composition was formed to a 2 mm thick sheet by a press machine which is previously preheated to a press temperature, and a predetermined shape was then punched out of it to obtain a test piece. The press temperature was set to 250°C except Example 3, and the press temperature was set to 290°C in Example 3. The elongation before the heat aging resistance test was measured for the obtained test piece in accordance with JIS K6251. The heat aging resistance test was performed while the test piece was held in a gear oven at a temperature of 140°C for 168 hours to measure the elongation after the heat aging resistance test in accordance with JIS K6251. The elongation change ratio between elongation before heat aging resistance test and that after the heat aging resistance test was calculated. A lower absolute value of the elongation change ratio can be rated as excellent heat resistance.

### Compression Set Resistance

The thermoplastic elastomer composition was pressed using a mold by a press machine which is previously preheated to a press temperature to obtain a cylindrical test piece having a diameter of 29 mm and a height of 12.5 mm. The press temperature was set to 250°C except Example 3, and the press temperature was set to 290°C in Example 3. The obtained test piece was placed under an environment of 120°C for 70 hours in a state where the test piece was compressed by 25% in accordance with JIS K6262, and the compression set was then measured. A smaller compression set can be rated as excellent compression set resistance,

### Fatigue Resistance

The same test piece as that used for evaluating the heat resistance was used. The test piece was stretched by 50%, and then returned to the 0% stretched state. This operation was repeated at a speed of 300 rpm. The number of operations until the test piece broke was measured. This was taken as the number of operations until breaking. The upper limit of the number of operations in the test in this case was set to 1,000,000. The larger number of operations until breaking can be rated as excellent fatigue resistance.

### Cold Resistance

The same test piece as that used for evaluating the heat resistance was used. The low-temperature impact brittleness test was performed in accordance with JIS K6261 to measure the 50% impact brittleness temperature. The lower 50% impact brittleness temperature can be evaluated as excellent cold resistance. A case where the 50% impact brittleness temperature was -20°C or lower was taken as "good", and a case where the brittleness temperature was higher than -20°C was taken as "poor".

### Synthesis Example 1 (Synthesis of Highly Saturated Nitrile Rubber (A-1))

To a reactor, 180 parts of ion exchanged water, 25 parts of a sodium dodecylbenzene sulfonate aqueous solution having a concentration of 10 wt%, 37 parts of acrylonitrile, 6 parts of mono-n-butyl maleate, and 0.5 parts of t-dodecyl mercaptan (molecular weight adjuster) were charged in this order. The inside gas was replaced with nitrogen 3 times, and 57 parts of 1,3-butadiene was then charged. The reactor was held at 5°C. 0.1 part of cumen hydroperoxide (polymerization initiator) and suitable amounts of a reducing agent and chelating agent were charged and the polymerization reaction was continued while stirring. Next, when the polymerization conversion rate reached 80%, 0.1 part of a hydroquinone aqueous solution having a concentration of 10 wt% (polymerization terminator) was added to stop the polymerization reaction, and a rotary evaporator of a water temperature of 60°C was then used to remove the residual monomer, thereby obtaining a latex of a nitrile rubber containing a mono-n-butyl maleate unit (solid content concentration: about 30 wt%).

Next, to give an amount of palladium of 1,000 ppm by weight with respect to the dry weight of the rubber contained in the obtained latex, an autoclave was charged with the obtained latex and palladium catalyst (solution of 1 wt% palladium acetate acetone solution and equal amount of ion exchanged water mixed together). The resultant was hydrogenated by reaction by a hydrogen pressure of 3 MPa and temperature of 50°C for 6 hours to obtain a latex of a highly saturated nitrile rubber (A-1).

To the obtained latex, two times the volume of methanol was added to cause it to coagulate, and the resultant was then filtered to obtain a solid (crumb). This was taken out, and dried in vacuo at 60°C for 12 hours to obtain the highly saturated nitrile rubber (A-1). The obtained highly saturated nitrile rubber (A-1) contained 35.6 wt% of an acrylonitrile unit, 59.0 wt% of a 1,3-butadiene unit (including saturated parts), and 5.4 wt% of a mono-n-butyl maleate unit, had an iodine value of 10, had a carboxyl group content of 3.1×10² ephr, and had a polymer Mooney viscosity (ML1+4, 100°C) of 48. The gel fraction amount of the highly saturated nitrile rubber (A-1) was 0.8 wt%.

### Synthesis Example 2 (Synthesis of Highly Saturated Nitrile Rubber (A-2))

To a reactor, 180 parts of ion-exchanged water, 25 parts of a sodium dodecylbenzenesulfonate aqueous solution having a concentration of 10 wt%, 20 parts of acrylonitrile, 4.5 parts of mono-n-butyl maleate, 35.5 parts of methoxyethyl acrylate, and 0.5 parts of t-dodecylmercaptan (molecular weight adjuster) were charged in this order. The inside gas was replaced with nitrogen three times, and 40 parts of 1,3-butadiene was then charged. Subsequently, the reactor was held at 5°C. 0.1 part of cumen hydroperoxide (polymerization initiator) was charged and the polymerization reaction was continued while stirring. When the polymerization conversion rate reached 80%, 0.1 part of a hydroquinone aqueous solution having a concentration of 10 wt% (polymerization terminator) was added to stop the polymerization reaction. Subsequently, the residual monomers were removed under reduced pressure at a water temperature of 60°C to obtain a latex of a nitrile rubber containing a mono-n-butyl maleate unit (solid content concentration: about 30 wt%).

Next, to give an amount of palladium of 1,000 ppm by weight with respect to the dry weight of the rubber contained in the obtained latex, an autoclave was charged with the obtained latex and palladium catalyst (solution of 1 wt% palladium acetate acetone solution and equal amount of ion exchanged water mixed together). The resultant was hydrogenated by reaction by a hydrogen pressure of 3 MPa and temperature of 50°C for 6 hours to obtain a latex of a highly saturated nitrile rubber (A-2).

To the obtained latex, two times the volume of methanol was added to cause it to coagulate, and the resultant was then filtered to obtain a solid (crumb). This was taken out, and dried in vacuo at 60°C for 12 hours to obtain the highly saturated nitrile rubber (A-2). The obtained highly saturated nitrile rubber (A-2) contained 24.0 wt% of an acrylonitrile unit, 47.8 wt% of a 1,3-butadiene unit (including saturated parts), 5.2 wt% of a mono n-butyl maleate unit, and 23.0 wt% of a methoxyethyl acrylate unit, had a carboxyl group content of 0.030 ephr, had an iodine value of 9, and had a polymer Mooney viscosity (ML1+4, 100°C) of 53. The gel fraction amount of the highly saturated nitrile rubber (A-2) was 2.5 wt%.

### Synthesis Example 3 (Synthesis of Highly Saturated Nitrile Rubber (A-3))

A highly saturated nitrile rubber (A-3) was obtained in the same manner as in Synthesis Example 2 except that the amounts of use of acrylonitrile and mono-n-butyl maleate were respectively changed to 20.4 parts from 20 parts and to 5 parts from 4.5 parts, 35.2 parts of n-butyl acrylate was used in place of 35.5 parts of methoxyethyl acrylate, and the amount of use of 1,3-butadiene was changed to 39.4 parts from 40 parts. The obtained highly saturated nitrile rubber (A-3) contained 21.0 wt% of an acrylonitrile unit, 44.0 wt% of a 1,3-butadiene unit (including saturated parts), 4.5 wt% of a mono-n-butyl maleate unit, and 30.5 wt% of a n-butyl acrylate unit, had a carboxyl group content of 0.026 ephr, had an iodine value of 10, and had a polymer Mooney viscosity (ML1+4, 100°C) of 55. The gel fraction amount of the highly saturated nitrile rubber (A-3) was 2.2 wt%.

### Synthesis Example 4 (Synthesis of Highly Saturated Nitrile Rubber (B-1))

A highly saturated nitrile rubber (B-1) was obtained in the same manner as in Synthesis Example 1 except that 4 parts of methacrylic acid was used in place of 6 parts of mono-n-butyl maleate, and the amount of use of 1,3-butadiene was changed to 59 parts from 57 parts. The obtained highly saturated nitrile rubber (B-1) contained 36.0 wt% of an acrylonitrile unit, 61.0 wt% of a 1,3-butadiene unit (including saturated parts), and 3.0 wt% of a methacrylic acid unit, had an iodine value of 11, had a carboxyl group content of 3.5×10⁻² ephr, and had a polymer Mooney viscosity (ML1+4, 100°C) of 60. The gel fraction amount of the highly saturated nitrile rubber (B-1) was 0.8 wt%.

### Synthesis Example 5 (Synthesis of Highly Saturated Nitrile Rubber (B-2))

A highly saturated nitrile rubber (B-2) was obtained in the same manner as in Synthesis Example 1 except that the amount of use of 1,3-butadiene was changed to 63 parts from 57 parts, and mono-n-butyl maleate was not used. The obtained highly saturated nitrile rubber (B-2) contained 36.2 wt% of an acrylonitrile unit and 63.8 wt% of a 1,3-butadiene unit (including saturated parts), had an iodine value of 8, and had a polymer Mooney viscosity (ML1+4, 100°C) of 57. The gel fraction amount of the highly saturated nitrile rubber (B-2) was 0.3 wt%.

### Example 1

In a Brabender Plasticorder made by Brabender, Inc. (internal volume: 250 ml) as a batch-type kneader which was preheated to 230°C, 40 parts of the highly saturated nitrile rubber (A-1) obtained in Synthesis Example 1 and 0.5 parts of 4,4'-di-(α,α-dimethylbenzyl)diphenylamine (trade name "Nocrac CD", made by Ouchi Shinko Chemical Industrial Co., Ltd., antiaging agent) were placed, and masticated for 1 minute. Then, into the kneader, 60 parts of nylon 6 (trade name "1013B", made by Ube Industries, Ltd., melting point: 220°C, polyamide-based polymer (B)) was introduced, followed by mixing for 5 minutes. Into the kneader, 1 part of hexamethylenediamine carbamate (trade name "Diak#1", made by Du Pont Corporation) as a polyamine cross-linking agent (C) was further introduced, followed by further mixing for 7 minutes in a state held at 230°C to dynamically cross-link the highly saturated nitrile rubber (A-1), thereby obtaining a thermoplastic elastomer composition.

The obtained thermoplastic elastomer composition was used, and evaluated for heat resistance, compression set resistance, fatigue resistance, and cold resistance in accordance with the above methods. The results are shown in Table 1.

### Example 2

In a Brabender Plasticorder made by Brabender, Inc. (internal volume: 250 ml) as a batch-type kneader which was preheated to 230°C, 40 parts of the highly saturated nitrile rubber (A-1) obtained in Synthesis Example 1 and 0.5 parts of 4,4'-di-(α,α-dimethylbenzyl)diphenylamine (trade name "Nocrac CD", made by Ouchi Shinko Chemical Industrial Co., Ltd., antiaging agent) were placed, and masticated for 1 minute. Then, into the kneader, 60 parts of nylon 6 (trade name "1013B", made by Ube Industries, Ltd., melting point: 220°C, polyamide-based polymer (B)) was introduced, followed by mixing for 5 minutes. Into the kneader, 1 part of hexamethylenediamine carbamate (trade name "Diak#1", made by Du Pont Corporation) as a polyamine cross-linking agent (C), and 1.6 parts of 1,8-diazabicyclo[5,4,0]undecene-7(DBU) (trade name "RHENOGRAN XLA-60 (GE2014)", made by Rhein Chemie Corporation, a product composed of 60% of DBU (including a fraction being zinc dialkyldiphosphate salt), a basic cross-linking accelerator) were further introduced, followed by further mixing for 7 minutes in a state held at 230°C to dynamically cross-link the highly saturated nitrile rubber (A-1), thereby obtaining a thermoplastic elastomer composition.

The obtained thermoplastic elastomer composition was used, and evaluated for heat resistance, compression set resistance, fatigue resistance, and cold resistance in accordance with the above methods. The results are shown in Table 1.

### Example 3

In a Brabender Plasticorder made by Brabender, Inc. (internal volume: 250 ml) as a batch-type kneader which was preheated to 275°C, 40 parts of the highly saturated nitrile rubber (A-1) obtained in Synthesis Example 1 and 0.5 parts of 4,4'-di-(α,α-dimethylbenzyl)diphenylamine (trade name "Nocrac CD", made by Ouchi Shinko Chemical Industrial Co., Ltd., antiaging agent) were placed, and masticated for 1 minute. Then, into the kneader, 60 parts of Nylon 66 (trade name "Amilan CM3006", made by Toray Industries, Inc., melting point: 265°C, polyamide-based polymer (B)) was introduced, followed by mixing for 3 minutes. Into the kneader, 1 part of hexamethylenediamine carbamate (trade name "Diak#1", made by Du Pont Corporation) as a polyamine cross-linking agent (C) and 1.6 parts of 1,8-diazabicyclo[5,4,0]undecene-7(DBU) (trade name "RHENOGRAN XLA-60 (GE2014)", made by Rhein Chemie Corporation, a product composed of 60% of DBU (including a fraction being zinc dialkyldiphosphate salt), a basic cross-linking accelerator) were further introduced, followed by further mixing for 3 minutes in a state held at 275°C to dynamically cross-link the highly saturated nitrile rubber (A-1), thereby obtaining a thermoplastic elastomer composition.

The obtained thermoplastic elastomer composition was used, and evaluated in the same manner as in Example 1. The results are shown in Table 1.

### Example 4

A thermoplastic elastomer composition was obtained in the same manner as in Example 2 except that 40 parts of the highly saturated nitrile rubber (A-2) obtained in Synthesis Example 2 was used in place of 40 parts of the highly saturated nitrile rubber (A-1) obtained in Synthesis Example 1. The thermoplastic elastomer composition was evaluated in a similar manner. The results are shown in Table 1.

### Example 5

A thermoplastic elastomer composition was obtained in the same manner as in Example 2 except that 40 parts of the highly saturated nitrile rubber (A-3) obtained in Synthesis Example 3 was used in place of 40 parts of the highly saturated nitrile rubber (A-1) obtained in Synthesis Example 1. The thermoplastic elastomer composition was evaluated in a similar manner. The results are shown in Table 1.

### Comparative Example 1

A thermoplastic elastomer composition was obtained in the same manner as in Example 1 except that the highly saturated nitrile rubber (B-1) obtained in Synthesis Example 4 was used in place of 40 parts of the highly saturated nitrile rubber (A-1) obtained in Synthesis Example 1. The thermoplastic elastomer composition was evaluated in a similar manner. The results are shown in Table 1.

### Comparative Example 2

A thermoplastic elastomer composition was obtained in the same manner as in Example 1 except that the highly saturated nitrile rubber (B-2) obtained in Synthesis Example 5 was used in place of 40 parts of the highly saturated nitrile rubber (A-1) obtained in Synthesis Example 1. The thermoplastic elastomer composition was evaluated in a similar manner. The results are shown in Table 1.

### Comparative Example 3

A thermoplastic elastomer composition was obtained in the same manner as in Example 1 except that hexamethylenediamine carbamate (trade name "Diak#1", made by Du Pont Corporation) as a polyamine cross-linking agent (C) was not used. The thermoplastic elastomer composition was evaluated in a similar manner. The results are shown in Table 1. In Comparative Example 3, a cross-linking agent was not added, whereby dynamic cross-linking did not substantially progress.

### [Table 1]

**Table 1**

| | | | Examples | | | | | Comparative Examples | | |
|---|---|---|---|---|---|---|---|---|---|---|
| | | | 1 | 2 | 3 | 4 | 5 | 1 | 2 | 3 |
| Highly saturated nitrile rubber | | | | | | | | | | |
| | Acrylonitrile unit | (wt%) | 35.6 | 35.6 | 35.6 | 24.0 | 21.0 | 36.0 | 36.2 | 35.6 |
| | 1,3-Butadiene unit (including saturated parts) | (wt%) | 59.0 | 59.0 | 59.0 | 47.8 | 44.0 | 61.0 | 63.8 | 59.0 |
| | Methoxyethyl acrylate unit | (wt%) | - | - | - | 23.0 | - | - | - | - |
| | n-Butyl acrylate unit | (wt%) | - | - | - | - | 30.5 | - | - | - |
| | Mono-n-butyl maleate unit | (wt%) | 5.4 | 5.4 | 5.4 | 5.2 | 4.5 | - | - | 5.4 |
| | Methacrylic acid unit | (wt%) | - | - | - | - | - | 3.0 | - | - |
| | Iodine value | | 10 | 10 | 10 | 9 | 10 | 11 | 8 | 10 |

| Composition of thermoplastic elastomer composition | | | | | | | | | | |
|---|---|---|---|---|---|---|---|---|---|---|
| | Highly saturated nitrile rubber (A-1) | (parts) | 40 | 40 | 40 | | | | | 40 |
| | Highly saturated nitrile rubber (A-2) | (parts) | | | | 40 | | | | |
| | Highly saturated nitrile rubber (A-3) | (parts) | | | | | 40 | | | |
| | Highly saturated nitrile rubber (B-1) | (parts) | | | | | | 40 | | |
| | Highly saturated nitrile rubber (B-2) | (parts) | | | | | | | 40 | |
| | Nylon 6 | (parts) | 60 | 60 | | 60 | 60 | 60 | 60 | 60 |
| | Nylon 66 | (parts) | | | 60 | | | | | |
| | 4,4'-di-(α,α-Dimethylbenzyl)diphenylamine | (parts) | 0.5 | 0.5 | 0.5 | 0.5 | 0.5 | 0.5 | 0.5 | 0.5 |
| | Hexamethylenediamine carbamate | (parts) | 1 | 1 | 1 | 1 | 1 | 1 | 1 | |
| | 1,8-Diazabicyclo[5,4,0]undecene-7 (DBU) | (parts) | | 1.6 | 1.6 | 1.6 | 1.6 | | | |
| Dynamic cross-linking temperature | | (°C) | 230 | 230 | 275 | 230 | 230 | 230 | 230 | No dynamic cross-linking |

| Evaluations | | | | | | | | | | |
|---|---|---|---|---|---|---|---|---|---|---|
| | Elongation change ratio through heat aging | (%) | -25 | -20 | -27 | -21 | -19 | -34 | -38 | -45 |
| | Compression set | (%) | 65 | 60 | 60 | 59 | 57 | 85 | 95 | 97 |
| | The number of operations until breaking | (times) | >1,000,000 | >1,000,000 | >1,000,000 | >1,000,000 | >1,000,000 | 8.000 | 50 | 500 |
| | Gold resistance | | Good | Good | Good | Good | Good | Poor | Poor | Poor |

In Table 1, in the evaluation of fatique properties, for the test pieces which did not break even after the fatique resistance test was performed 1, 000, 000 times, the number of operations until breaking was represented as ">1, 000, 000".

From Table 1, the thermoplastic elastomer composition obtained by dynamically cross-linking the highly saturated nitrile rubber (A) containing the mono-n-butyl maleate unit as the α,β-ethylenically unsaturated dicarboxylic acid monoester monomer unit in the presence of the polyamide-based polymer (B) and the polyamine cross-linking agent (C) provided the formed article having excellent heat resistance (elongation change ratio between elongation before heat aging and that after heat aging), compression set resistance (compression set), fatigue resistance (the number of operations until breaking), and cold resistance (brittleness temperature) (Examples 1 to 5).

On the other hand, when the highly saturated nitrile rubber containing the methacrylic acid unit as a carboxyl group-containing monomer unit was used, and when the highly saturated nitrile rubber containing no carboxyl group-containing monomer unit was used, the obtained formed article had poor heat resistance, compression set resistance, bending fatigue resistance, and cold resistance even if the highly saturated nitrile rubber was dynamically cross-linked in the presence of the polyamide-based polymer (B) and the polyamine cross-linking agent (C) (Comparative Examples 1 and 2).

Even when the highly saturated nitrile rubber (A) containing the mono-n-butyl maleate unit was used, the obtained formed article had poor heat resistance, compression set resistance, fatigue resistance, and cold resistance if the highly saturated nitrile rubber (A) was not dynamically cross-linked (Comparative Example 3).

## Claims

1. A method for producing a thermoplastic elastomer composition, the method comprising the step of dynamically cross-linking a highly saturated nitrile rubber (A) in the presence of a polyamide-based polymer (B) and a polyamine cross-linking agent (C), the highly saturated nitrile rubber (A) containing an α,β-ethylenically unsaturated nitrile monomer unit and an α,β-ethylenically unsaturated dicarboxylic acid monoester monomer unit and having an iodine value measured in accordance with JIS K 6235 of 120 or less.

2. The method for producing a thermoplastic elastomer composition according to claim 1, wherein the dynamic cross-linking is performed by mixing the highly saturated nitrile rubber (A), the polyamide-based polymer (B), and the polyamine cross-linking agent (C) at 100 to 400°C.

3. The method for producing a thermoplastic elastomer composition according to claim 1 or 2, wherein a blending ratio of the highly saturated nitrile rubber (A) and the polyamide-based polymer (B) is 20 : 80 to 80 : 20 in terms of a weight ratio of "highly saturated nitrile rubber (A) : polyamide-based polymer (B)".

4. The method for producing a thermoplastic elastomer composition according to any one of claims 1 to 3, wherein an amount of the polyamine cross-linking agent (C) blended is 0.1 to 20 parts by weight with respect to 100 parts by weight of the highly saturated nitrile rubber (A).

5. The method for producing a thermoplastic elastomer composition according to any one of claims 1 to 4, wherein the polyamide-based polymer (B) is at least one selected from nylon 6 and nylon 66.

6. The method for producing a thermoplastic elastomer composition according to any one of claims 1 to 5, wherein, in the dynamic cross-linking step, the highly saturated nitrile rubber (A) is dynamically cross-linked in the presence of the polyamide-based polymer (B), the polyamine cross-linking agent (C), and a basic cross-linking accelerator (D).

7. The method for producing a thermoplastic elastomer composition according to claim 6, wherein an amount of the basic cross-linking accelerator (D) blended is 0.1 to 20 parts by weight with respect to 100 parts by weight of the highly saturated nitrile rubber (A) .

8. A method for producing a formed article, the method comprising the step of forming the thermoplastic elastomer composition obtained by the method according to any one of claims 1 to 7.

## Patentansprüche

1. Ein Verfahren zur Herstellung einer thermoplastischen Elastomerzusammensetzung, wobei das Verfahren den Schritt der dynamischen Vernetzung eines hochgesättigten Nitrilkautschuks (A) in Gegenwart eines Polymers auf Polyamidbasis (B) und eines Polyamin-Vernetzungsmittels (C) umfasst, wobei der hochgesättigte Nitrilkautschuk (A) eine α,β-ethylenisch ungesättigte Nitril-Monomereinheit und eine α,β-ethylenisch ungesättigte Dicarbonsäuremonoester-Monomereinheit enthält und eine gemäß JIS K 6235 gemessene lodzahl von 120 oder weniger aufweist.

2. Das Verfahren zur Herstellung einer thermoplastischen Elastomerzusammensetzung nach Anspruch 1, wobei die dynamische Vernetzung durch Mischen des hochgesättigten Nitrilkautschuks (A), des Polymers auf Polyamidbasis (B) und des Polyamin-Vernetzungsmittels (C) bei 100 bis 400 °C durchgeführt wird.

3. Das Verfahren zur Herstellung einer thermoplastischen Elastomerzusammensetzung nach Anspruch 1 oder 2, wobei ein Mischungsverhältnis des hochgesättigten Nitrilkautschuks (A) und des Polymers auf Polyamidbasis (B) 20 : 80 bis 80 : 20 beträgt, ausgedrückt als Gewichtsverhältnis von "hochgesättigter Nitrilkautschuk (A) : Polymer auf Polyamidbasis (B)".

4. Das Verfahren zur Herstellung einer thermoplastischen Elastomerzusammensetzung nach einem der Ansprüche 1 bis 3, wobei eine Menge des beigemischten Polyamin-Vernetzungsmittels (C) 0,1 bis 20 Gewichtsteile, bezogen auf 100 Gewichtsteile des hochgesättigten Nitrilkautschuks (A), beträgt.

5. Das Verfahren zur Herstellung einer thermoplastischen Elastomerzusammensetzung nach einem der Ansprüche 1 bis 4, wobei das Polymer auf Polyamidbasis (B) mindestens eines ist, das ausgewählt ist aus Nylon 6 und Nylon 66.

6. Das Verfahren zur Herstellung einer thermoplastischen Elastomerzusammensetzung nach einem der Ansprüche 1 bis 5, wobei in dem dynamischen Vernetzungsschritt der hochgesättigte Nitrilkautschuk (A) in Gegenwart des Polymers auf Polyamidbasis (B), des Polyamin-Vernetzungsmittels (C) und eines basischen Vernetzungsbeschleunigers (D) dynamisch vernetzt wird.

7. Das Verfahren zur Herstellung einer thermoplastischen Elastomerzusammensetzung nach Anspruch 6, wobei eine Menge des beigemischten basischen Vernetzungsbeschleunigers (D) 0,1 bis 20 Gewichtsteile, bezogen auf 100 Gewichtsteile des hochgesättigten Nitrilkautschuks (A), beträgt.

8. Ein Verfahren zur Herstellung eines geformten Gegenstandes, wobei das Verfahren den Schritt des Formens der thermoplastischen Elastomerzusammensetzung, die durch das Verfahren nach einem der Ansprüche 1 bis 7 erhalten wurde, umfasst.

## Revendications

1. Procédé pour produire une composition d'élastomère thermoplastique, le procédé comprenant l'étape de réticulation dynamique d'un caoutchouc de nitrile hautement saturé (A) en présence d'un polymère à base de polyamide (B) et d'un agent de réticulation polyamine (C), le caoutchouc de nitrile hautement saturé (A) contenant un motif monomère de nitrile à insaturation α,β-éthylénique et un motif monomère de monoester d'acide dicarboxylique à insaturation α,β-éthylénique et ayant un indice d'iode, mesuré conformément à la norme JIS K 6235, de 120 ou moins.

2. Procédé pour produire une composition d'élastomère thermoplastique selon la revendication 1, dans lequel la réticulation dynamique est effectuée par mélange du caoutchouc de nitrile hautement saturé (A), du polymère à base de polyamide (B), et de l'agent de réticulation polyamine (C) à une température de 100 à 400°C.

3. Procédé pour produire une composition d'élastomère thermoplastique selon la revendication 1 ou 2, dans lequel le rapport de mélange du caoutchouc de nitrile hautement saturé au polymère à base de polyamide (B) est de 20/80 à 80/20 en termes de rapport en poids "caoutchouc de nitrile hautement saturé (A) / polymère à base de polyamide (B)".

4. Procédé pour produire une composition d'élastomère thermoplastique selon l'une quelconque des revendications 1 à 3, dans lequel la quantité de l'agent de réticulation polyamine (C) mélangé est de 0,1 à 20 parties en poids pour 100 parties en poids du caoutchouc de nitrile hautement saturé (A).

5. Procédé pour produire une composition d'élastomère thermoplastique selon l'une quelconque des revendications 1 à 4, dans lequel le polymère à base de polyamide (B) est au moins l'un choisi parmi le nylon 6 et le nylon 66.

6. Procédé pour produire une composition d'élastomère thermoplastique selon l'une quelconque des revendications 1 à 5, dans lequel, dans l'étape de réticulation dynamique, le caoutchouc de nitrile hautement saturé (A) est dynamiquement réticulé en présence du polymère à base de polyamide (B), de l'agent de réticulation polyamine (C), et d'un accélérateur de réticulation basique (D).

7. Procédé pour produire une composition d'élastomère thermoplastique selon la revendication 6, dans lequel la quantité de l'accélérateur de réticulation basique (D) mélangé est de 0,1 à 20 parties en poids pour 100 parties en poids du caoutchouc de nitrile hautement saturé (A).

8. Procédé pour produire un article façonné, le procédé comprenant l'étape de façonnage de la composition d'élastomère thermoplastique obtenue par le procédé selon l'une quelconque des revendications 1 à 7.
